# EUROPEAN PATENT APPLICATION

(11) **EP 1 914 207 A1**
(43) Date of publication of application: **23.04.2008**
(21) Application number: 07117226.6
(22) Date of filing: 26.09.2007
(51) Int. Cl.: C02F 11/10, F23G 5/027

(54) **Integrated plant for inertizing dangerous mixed organic-inorganic sludges**

(30) Priority: 27.09.2006 IT MI20061847
(71) Applicant: Impieco S.r.l., 38068 Rovereto (TN) (IT)
(72) Inventor: Ragazzi Marco, 38100, TRENTO (IT); Baggio Paolo, 35100, PADOVA (IT); Dal Maschio Roberto, 38100, TRENTO (IT)
(74) Representative: De Gregori, Antonella

(57) **Abstract**

An integrated plant (10) for inertizing dangerous mixed organic-inorganic sludges is composed by a pyrolysis reactor(20), fed with the sludges (21) and inert gas (22) (nitrogen N₂), and heated by hot fumes (23) in order to produce gases (24) and ashes (26), a vitrification furnace (30), downstream with respect to the pyrolysis reactor (20), for vitrifying the ashes (26) produced in the pyrolysis reactor, and able to burn a fraction (25) of gases (24) coming from the pyrolysis reactor (20), for obtaining by melting a vitrified inert material (31) and hot fumes (32), a gas-gas heat-exchanger (40), downstream with respect to the vitrification furnace (30) for recovering part of the enthalpic content of the fumes (32), produced in the vitrification furnace sending it back as heating medium (23) for the pyrolysis reactor.

## Description

The present invention deals with an integrated plant for inertizing dangerous mixed organic-inorganic sludges derived from industrial activities, civil activities as wastewater sewage or incinerators ashes and contaminated soils.

Nowadays, sludges degradation and by-products storage is based on landfill disposal and incineration with many ecological problems and high costs.

The proponent of the invention solved in an ecological and economically convenient manner the problem of the previously described dangerous mixed organic-inorganic sludges degradation and by-products storage by means of an integrated plant able to recover heat and mass flows for achieving an economically convenient inertization.

This and other objectives according to the present invention are achieved by an integrated plant for inertizing the sludges previously mentioned according to the claim 1.

Further characteristics of the invention are treated by the deriving claims.

An integrated plant for the inertization of dangerous mixed organic-inorganic sludges derived from industrial activities, civil activities as wastewater sewage or incineration, and contaminated soils, according to the present invention, is composed by a sludge pyrolysis reactor, a vitrification furnace, downstream with respect to the pyrolysis reactor, able to burn partially the gases coming from the pyrolysis reactor, for vetrifying ashes produced by the pyrolysis reactor, a gas/gas heat-exchanger for the partial recovery of heat content of glass furnace fumes for heating the pyrolysis reactor.

The characteristics and advantages of an integrated plant for inertizing dangerous mixed organic-inorganic sludges according to the present invention will be more evident from the following , illustrative but not restrictive,description referred to the enclosed sketches where
- Figure 1 shows a sketch of an integrated plant for inertizing dangerous mixed organic-inorganic sludges.
- Figure 2 shows a sketch of an integrated plant for inertizing dangerous mixed organic-inorganic sludges according to a different lay-out of the invention.

Referring to the Figures an integrated plant 10 for inertizing dangerous mixed organic-inorganic sludges, according to the present invention, includes a pyrolysis reactor 20 fed by the sludges 21 and inert gas 22 (nitrogen N₂), heated by recovered heat 23, producing a gas stream 24 and ashes 26, a vitrification furnace 30, downstream respect to the pyrolysis reactor 20, for vitrifying the ashes 26 byproduct of the pyrolysis reactor and able to burn a fraction 25 of the gas stream 24 coming from the pyrolysis reactor 20 in order to produce a glassy material chemically inert 31 and combustion fumes 32, a gas/gas heat -exchanger 40, downstream with respect to the vitrification furnace 30, for recovering part of the enthalpic content of the combustion fumes (32), produced in the vitrification furnace 30 sending it back as hot air to the pyrolysis reactor.

The pyrolysis reactor 20 of the plant according to the invention exploits the energetic content of the organic part of sludges transforming it in a gas stream composed by lower molecular weight chemicals thanks to a non-oxidizing atmosphere inside and temperatures lower than a normal combustion, so that dangerous high molecular weight organic chemicals are destroyed and their energy content is preserved.

This fact allows to obtain from the degradation of dangerous high molecular weight organic components a gaseous fuel with high calorific power 24 and a residue constituted mainly by ashes 26 that by melting are transformed in an inert glassy material, so avoiding their landfill disposal, or better still transforming it in a commercial raw material.

The vitrification furnace 30 gets the ashes 26 and a fraction 25 of gas stream 24 from the pyrolysis reactor as recycled fuel.

By the vitrification process is obtained an inert glassy material 31, useful as recycled raw material for inerts, fillers and similar, and combustion high temperature fumes 32, that in a gas/gas heat-exchanger give a fraction of their enthalpy to a clean air flow 41 used as heating medium for the pyrolysis reactor.

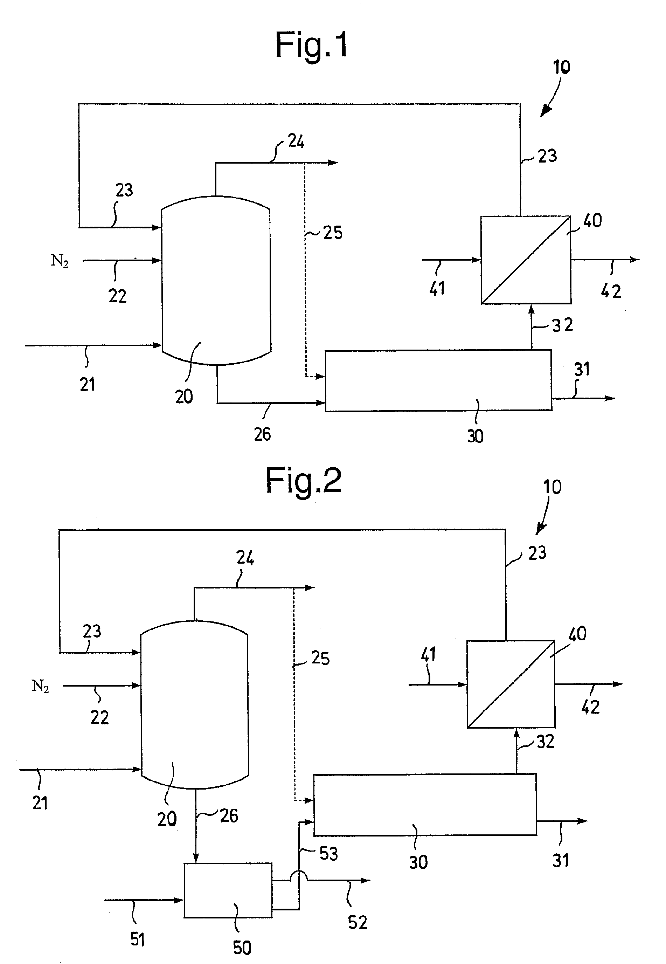

An alternative invented plant layout is shown in Figure 2, where, downstream with respect to the pyrolysis reactor 20, a boiler is fed with coarser ashes 26 and a comburent 51, so that the solid fraction 26 produced in the pyrolysis reactor can be treated, along with other interesting flows as for instance incinerator ashes, in order to obtain a feed 53 with the right granulometry for the vitrification process and gases 52 useful as energy source.

The integration of pyrolysis and vitrification processes allows evident energetic, environmental and economical improvements : the combustion fumes produced in the glass furnace can heat the pyrolysis reactor through the regenerative gas/gas heat-exchanger 40.

According to the invention only one exhaust gases treatment plant is required, due to the lower environmental impact of the pyrolysis reactor with respect to other technologies; moreover the integrated system allows interesting flexibility to adjusting to local situation and needes.

## Claims

1. Integrated plant (10) for inertizing dangerous mixed organic-inorganic sludges derived from industrial activities, civil activities as wastewater sewage or incinerators ashes and contaminated soils, charachterized in that it comprises:
- a pyrolysis reactor (20) fed with the previously described sludges (21), inert gas (22) (nitrogen N₂) and heated with recycled hot air (23) for gases (24) and ashes (26) production.
- a vitrification furnace (30), downstream with respect to the pyrolysis reactor (20), for vitrification of the ahses (26) produced in the pyrolysis reactor and capable to burn a fraction (25) of the gases (24) produced in the pyrolysis reactor (20) in order to produce an inert glassy material (31) and fumes (32).
- a regenerative gas/gas heat exchanger (40) downstream with respect to the glass furnace (30) for the recovery of the enthalpy of the fumes (32) produced in the glass furnace, in a way that clean air (41) is given back as hot air (23) used as heating medium for the pyrolysis reactor (20).

2. Integrated plant (10), according to claim 1, where downstream with respect to the pyrolysis reactor (20) it is present a boiler fed by coarse ashes (26) and a comburent (51), so that the solid fraction (26) produced in the pyrolysis reactor can be treated, along with other interesting flows as for instance incinerator ashes, in order to obtain a feed (53) with the right granulometry for the vitrification process and gases (52) useful as energy source.
